# EUROPÄISCHE PATENTSCHRIFT

(11) **EP 1 314 965 B1**
(45) Veröffentlichungstag und Bekanntmachung des Hinweises auf die Patenterteilung: **11.06.2008**
(21) Anmeldenummer: 02023934.9
(22) Anmeldetag: 25.10.2002
(51) Int. Cl.: G01D 5/244

(54) **Kontrollvorrichtung einer Positionsmesseinrichtung**
Control arrangement for a position measuring device
Dispositif de contrôle d'un capteur de position

(30) Priorität: 21.11.2001 DE 10157112
(43) Veröffentlichungstag der Anmeldung: 28.05.2003
(73) Patentinhaber: Dr. Johannes Heidenhain GmbH, 83292 Traunreut (DE)
(72) Erfinder: Burgschat, Reiner, 07745 Jena (DE); Metzner, Werner, 07747 Jena (DE); Stelzner, Robert, 99441 Göttern (DE)

(56) Entgegenhaltungen:
- DE-A1- 4 428 673
- US-A- 5 883 298

## Beschreibung

Die Erfindung betrifft eine Kontrollvorrichtung zur Kontrolle der Amplitudenhöhe zumindest eines analogen Abtastsignals einer Positionsmesseinrichtung gemäß dem Oberbegriff des Patentanspruches 1 sowie ein Verfahren zur Erzeugung eines Hinweises über die Amplitudenhöhe mit der Kontrollvorrichtung gemäß dem Oberbegriff des Patentanspruches 12.

Die Kontrolle der Abtastsignale ist insbesondere bei der Montage der Positionsmesseinrichtung erforderlich. Die Signalqualität und somit die Messgenauigkeit ist erheblich von der exakten Justierung des Abtastkopfes relativ zum Maßstab abhängig. Um bei inkrementalen Positionsmesseinrichtungen eine hohe Messgenauigkeit zu gewährleisten, sollen die vom Abtastkopf erzeugten Abtastsignale eine hohe und gleiche Amplitude sowie einen gegenseitigen Phasenversatz von 90° aufweisen. Die Amplitude wird im Wesentlichen durch die Lage des Abtastkopfes zum Maßstab bestimmt, das heißt Abstand, Verdrehung und seitliche Verschiebung des Abtastkopfes senkrecht zur Messrichtung relativ zum Maßstab.

Diese Parameter der analogen Abtastsignale können gemäß der WO 90/02956 mit einem Oszilloskop dargestellt werden. Hierzu werden die beiden um 90° gegeneinander phasenverschobenen Abtastsignale den beiden Kanälen eines Zweistrahl-Oszilloskops zugeführt, so dass am Bildschirm eine Lissajous-Figur erzeugt wird. Der Radius der Lissajous-Figur ist ein Maß für die Amplituden sowie die Phasenbeziehung beider Abtastsignale.

Gemäß der US 5,241,173 werden die Abtastsignale einer Kontrollvorrichtung zugeführt, welche den Amplitudenwert mit einem Grenzwert vergleicht. Liegt der Amplitudenwert unterhalb dieses Grenzwertes, wird eine Anzeige aktiviert, die als Hinweis dafür dient, dass der Abtastkopf gegenüber dem Maßstab falsch angebaut ist. Wesentlich ist dabei, dass die Kontrollvorrichtung ausschließlich eine Information ausgibt, die den Hinweis gibt, ob der Abtastkopf korrekt oder nicht korrekt angebaut ist.

Es wurde bereits erkannt, dass dieser Hinweis allein für den Anbau nicht ausreicht und es für den Anwender vorteilhaft ist, auch einen Hinweis bezüglich der Signaltendenz zu erhalten. Hierzu wird in der EP 1 126 248 A2 vorgeschlagen, dass man durch Vergleich des Amplitudenwertes mit einem vorgegebenen Sollwert ein Abweichungssignal bildet. Dieses Abweichungssignal wird einerseits zur Nachregelung des Abtastsignals auf gleichbleibende Amplitudenhöhe verwendet und andererseits dient es als Hinweis bezüglich des Funktionszustandes der Positionsmesseinrichtung. Das Abweichungssignal ist ein Maß für den aktuellen Abtastabstand und wird zur Einstellung eines optimalen Abtastabstandes genutzt. Der angegebene Hinweis, beispielsweise in Form einer optischen Anzeige, ist proportional zum Abweichungssignal. Änderungen der Amplitudenhöhe im Bereich des Sollwertes wirken sich auf das Hinweissignal im gleichen Ausmaß aus wie Änderungen der Amplitudenhöhe in größerer Entfernung vom Sollwert. Dies erschwert die Einstellung des Abtastkopfes in der Lage zum Maßstab sowie die Funktionskontrolle.

Der Erfindung liegt die Aufgabe zugrunde, eine Kontrollvorrichtung zur Kontrolle der Amplitudenhöhe zumindest eines Abtastsignals einer Positionsmesseinrichtung anzugeben, durch die ein Hinweis erzeugbar ist, der eine bessere Aussage über den Funktionszustand zulässt.

Diese Aufgabe wird durch eine Kontrollvorrichtung mit den Merkmalen des Anspruches 1 gelöst.

Ein Abtastkopf mit einer derartigen Kontrollvorrichtung ist im Anspruch 10 angegeben und eine Positionsmesseinrichtung im Anspruch 11.

Vorteilhafte Ausgestaltungen der Kontrollvorrichtung sind in den weiteren abhängigen Ansprüchen angeführt.

Weiterhin soll ein Verfahren zur Bildung eines entsprechend aussagefähigen Hinweises angegeben werden.

Diese Aufgabe wird durch ein Verfahren mit den Merkmalen des Anspruches 12 gelöst.

Einzelheiten sowie Vorteile der Erfindung ergeben sich aus der nachfolgenden Beschreibung von Ausführungsbeispielen der Erfindung anhand der Figuren. Dabei zeigt:
- Figur 1: ein schematisches Blockschaltbild einer Positionsmesseinrichtung mit einer Kontrollvorrichtung gemäß der Erfindung,
- Figur 2: eine Schaltung zur Bildung des Amplitudensignals,
- Figur 3: ein Signaldiagramm zu Figur 2,
- Figur 4: ein erstes Ausführungsbeispiel einer Bewertungseinrichtung,
- Figur 5: ein Signaldiagramm zu Figur 4,
- Figur 6: ein zweites Ausführungsbeispiel einer Bewertungseinrichtung und
- Figur 7: ein Signaldiagramm zu Figur 6.

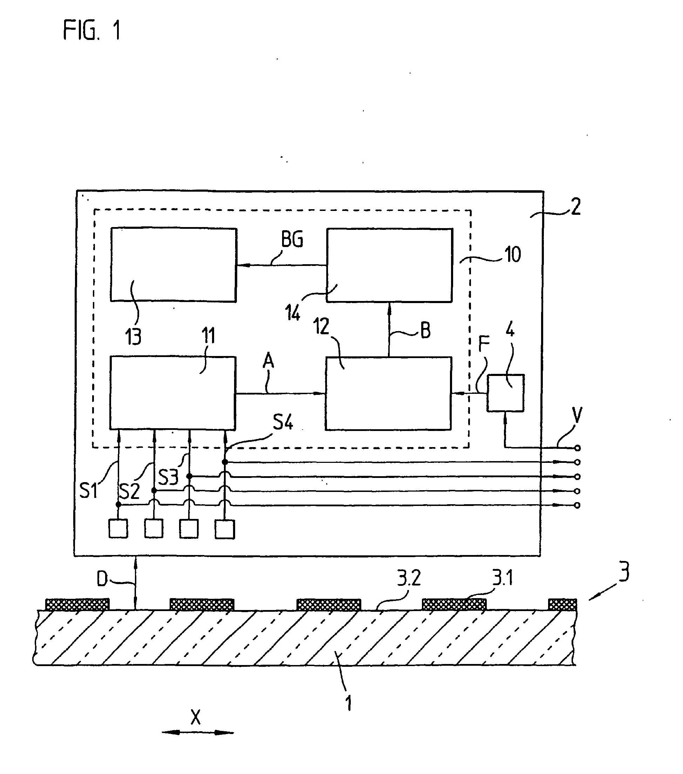

Die in Figur 1 dargestellte Positionsmesseinrichtung besteht aus einem Maßstab 1 sowie einem Abtastkopf 2. Der Maßstab 1 ist beispielsweise ein Maßband, das an seiner Oberfläche eine Teilung 3, bestehend aus abwechselnd reflektierenden Bereichen 3.1 und nicht reflektierenden Bereichen 3.2 aufweist. Der Abtastkopf 2 tastet die Teilung 3 des Maßstabes 1 in Messrichtung X ab und erzeugt dabei mehrere um 90° gegeneinander phasenverschobene periodische analoge Abtastsignale S1, S2, S3 und S4. Die Amplitudenhöhe dieser Abtastsignale S1 bis S4 ist abhängig von der Lage des Abtastkopfes zum Maßstab 1, insbesondere vom Abtastabstand D. Zur Funktionsfähigkeit der Positionsmesseinrichtung ist es erforderlich, dass die Amplitudenhöhe ein bestimmtes Maß nicht unterschreitet. Es ist deshalb bei der Montage des Abtastkopfes 2 relativ zum Maßstab 1 besonders wichtig, die Lage zum Maßstab 1 derart einzustellen, dass die Amplitude eine ausreichende Höhe aufweist.

Gemäß der Erfindung wird die Amplitudenhöhe der Abtastsignale S1 bis S4 mit einer Kontrollvorrichtung 10 überwacht, die ein Detektormittel 11 zur Bestimmung der Amplitudenhöhe der Abtastsignale S1 bis S4 und Erzeugung eines davon abhängigen Amplitudensignals A, ein Mittel 12 zur Bildung eines Abweichungssignals B durch Vergleich des Amplitudensignals A mit einem vorgegebenen Sollsignal F, eine Bewertungseinrichtung 14, um das Abweichungssignal B unterschiedlich zu wichten, sowie ein Hinweismittel 13 zum Vorsehen eines Hinweises in Abhängigkeit vom gewichteten Abweichungssignal BG aufweist.

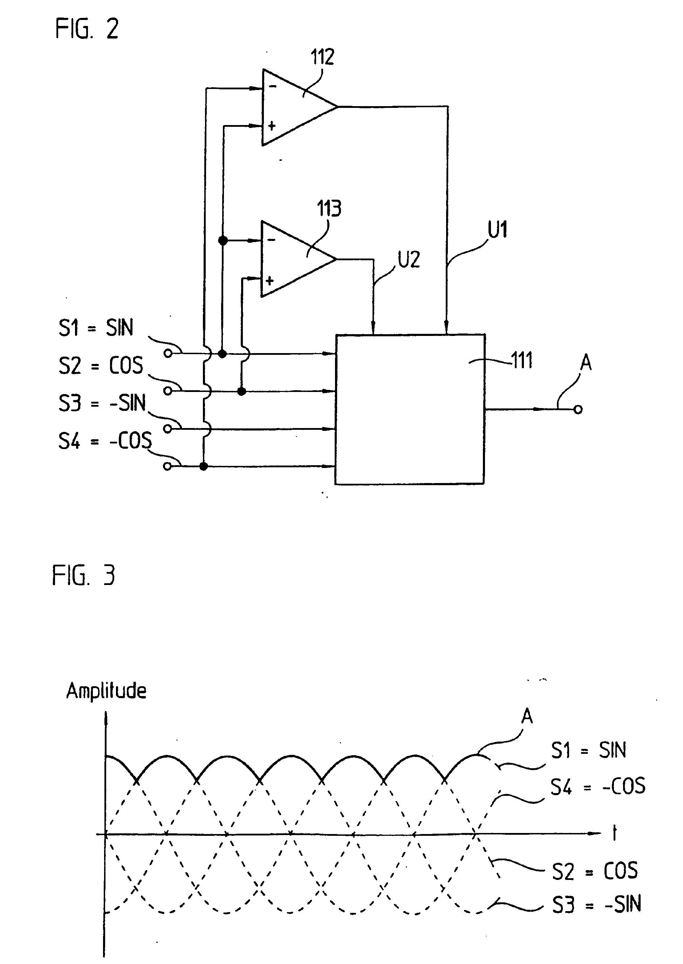

Das Detektormittel 11 ist in Figur 2 dargestellt, es besteht aus einem Multiplexer 111, dem einerseits die Abtastsignale S1 bis S4 zugeführt werden und dem andererseits über Steuereingänge Umschaltsignale U1, U2 zugeführt werden. Die Umschaltsignale U1, U2 werden von einer Komparatorschaltung mit zwei Komparatoren 112, 113 aus den Abtastsignalen S1 bis S4 erzeugt. Der Multiplexer 111 selektiert dabei aus den Abtastsignalen S1 bis S4 jeweils das mit maximaler Amplitude und setzt diese selektierten Abtastsignale S1 bis S4 zu einer Hüllkurve zusammen, welches das Amplitudensignal A darstellt. Das Amplitudensignal A ist direkt proportional zur momentanen Amplitudenhöhe der Abtastsignale S1 bis S4. Die Signale hierzu sind in Figur 3 dargestellt.

Eine alternative Möglichkeit zur Erzeugung des Amplitudensignals A besteht auch darin, es rechnerisch durch A = S1² + S2² zu bilden. Bei dieser Methode ist aber ein Prozessor erforderlich, wobei die erstgenannte Methode ohne diesen auskommt. Das Amplitudensignal A ist auch durch bekannte Gleichrichterschaltungen, beispielsweise gemäß der DE 44 28 673 A1 erzeugbar sowie durch bekannte Verfahren zur Maximalwertbestimmung, indem beim Nulldurchgang eines Abtastsignals der Momentanwert des um 90° dazu phasenverschobenen Abtastsignals als Amplitudensignal A übernommen wird.

Das Amplitudensignal A wird dem Mittel 12 zur Bildung eines Abweichungssignals B zugeführt. Das Mittel 12 vergleicht dazu das Amplitudensignal A mit einem vorgegebenen Sollwert F. Wie in Figur 1 dargestellt ist, wird das Sollsignal F vorzugsweise durch eine Einrichtung 4 von der Versorgungsspannung V der Positionsmesseinrichtung abgeleitet.

Das Abweichungssignal B wird in der Bewertungseinrichtung 14 in Abhängigkeit seiner momentanen Größe unterschiedlich gewichtet und dann erst als gewichtetes Abweichsignal BG dem Hinweismittel 13 zugeführt. Die Wichtung des Abweichungssignals B erfolgt derart, dass bei einem kleinen Abweichungssignal B, das heißt also, wenn das Amplitudensignal A nur wenig vom Sollsignal F bzw. Sollwert abweicht, dieses Abweichungssignal B dem Hinweismittel 13 geringer gewichtet zugeführt wird, als dies bei einem größeren Abweichungssignal B erfolgt. Die Bewertungseinrichtung 14 und das Hinweismittel 13 sorgen also dafür, dass das Abweichungssignal B bei einem kleinen Wert am Hinweismittel 13 geringer gewichtet angezeigt wird, als dies bei einem größeren Abweichungssignal B erfolgt. Die Bewertungseinrichtung 14 sorgt also dafür, dass die Ansprechempfindlichkeit des Hinweismittels 13 gegenüber Änderungen im Abweichungssignal B unterschiedlich ist. Die Ansprechempfindlichkeit ist bei kleinem Abweichungssignal B geringer als bei größerem Abweichungssignal B. Der Maßstab für die Abbildung der Abweichung ist somit abhängig vom Amplitudensignal A.

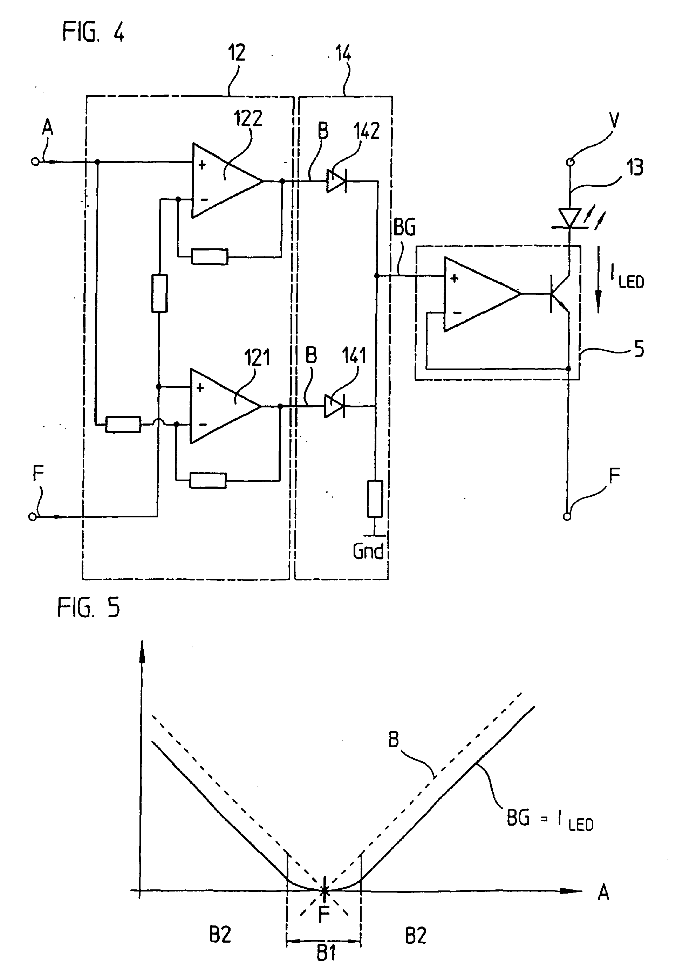

Ein erstes Beispiel eines Mittels 12 zur Bildung des Abweichungssignals B, einer Bewertungseinrichtung 14 und einem Hinweismittel 13 ist in Figur 4 dargestellt. Diese Schaltung besteht aus zumindest einem ersten Vergleicher 121, einer nachgeordneten Diode 141 sowie einer nachgeordneten Lichtquelle 13 als Hinweismittel. Der erste Vergleicher in Form eines Differenzverstärkers 121 bildet die Differenz zwischen dem Sollsignal F und dem Amplitudensignal A als B = F - A. Dieses so gebildete Differenzsignal ist das Abweichungssignal B, welches zur größenabhängigen Wichtung der Diode 141 zugeführt wird. Die Diode 141 wird nur leitend, wenn B positiv ist und sie wichtet B entsprechend der Diodenkennlinie. Das so erzeugte gewichtete Abweichungssignal BG bildet den linken Zweig des Signaldiagramms gemäß Figur 5, vom Sollsignal F ausgehend. Aus Figur 5 ist ersichtlich, dass bis zu einer Abweichung von 10% bis 25% des Amplitudensignals A vom Sollsignal F eine geringe Gewichtung erfolgt und bei größerem Abweichungssignal B eine größere Gewichtung. Entsprechend der Wichtung ändert sich die Lichtstärke der Lichtquelle 13, die über eine Stromquelle 5 angesteuert wird. In Figur 5 ist das gewichtete Abweichungssignal B, das proportional zum Strom I_{LED} durch die Lichtquelle 13 ist, in Abhängigkeit vom Amplitudensignal A dargestellt. Der erste Vergleicher 121 dient also dazu, um festzustellen, ob das Amplitudensignal A kleiner ist als das Sollsignal F.

Vorteilhaft ist es nun, zusätzlich festzustellen, ob das Amplitudensignal A größer ist als das Sollsignal S. Hierzu dient ein zweiter Verstärker 122, der das Abweichungssignal B = A - F bildet. Die nachgeordnete Diode 142 wird nur leitend, wenn B positiv ist und wichtet B entsprechend der Durchlasscharakteristik. Das so erzeugte gewichtete Abweichungssignal BG bildet den rechten Zweig des Signaldiagramms gemäß Figur 5, vom Sollsignal F ausgehend.

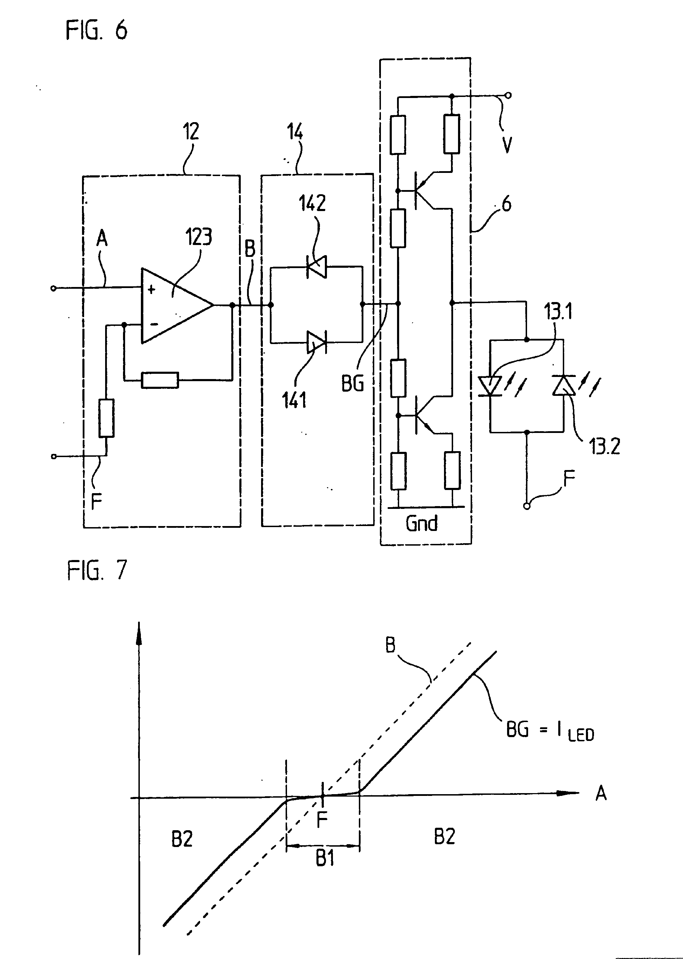

Die geringe Wichtung des Abweichungssignals B im Bereich B1 des Sollsignals F hat den Vorteil, dass Abweichungen vom Sollsignal F in diesem Bereich B1 dem Anwender nicht in dem Ausmaß angezeigt werden, als im übrigen Bereich B2. Schwankungen im Amplitudensignal A im Bereich B1 des Sollwertes F verursachen keine bzw. nur eine geringe Änderung des Hinweises. Die Wichtung ist mit einer Multiplikation des Abweichungssignals B mit einem Multiplikationsfaktor vergleichbar. Dieser Multiplikationsfaktor ist im Bereich B1 geringer als im Bereich B2 (Figuren 5 und 7). Der Multiplikationsfaktor kann im Bereich B1 auch Null sein, er kann im Bereich B1 von Null auf einen vorgegebenen Wert ansteigen und dann im Bereich B2 konstant bleiben oder er kann im Bereich B1 einen kleinen konstanten Wert aufweisen und im Bereich B2 einen größeren konstanten Wert. Die Variation des Hinweises und somit die Wichtung des Abweichungssignals gemäß einer Exponentialfunktion ist besonders vorteilhaft.

Das Sollsignal F hat beispielsweise den Wert 0,5 Volt, der Bereich B1 ist dann ± 20% vom Sollsignal F, also ± 0,1 Volt, die Grenzen zwischen B1 und B2 liegen somit bei 0,5 ± 0,1 Volt. Angenommen, im Bereich B1 ist der Multiplikationsfaktor 20 und im Bereich B2 ist er 200, dann bewirkt eine Änderung des Amplitudensignals A um 0,05 Volt im Bereich B1 eine Änderung des gewichteten Abweichungssignals BG und somit des Hinweises um 1 Volt bzw. allgemeiner ausgedrückt um 1 Einheit. Dagegen bewirkt eine Änderung des Amplitudensignals A um 0,05 Volt im Bereich B2 eine Änderung des gewichteten Abweichungsssignals BG und somit des Hinweises um 10 Volt, bzw. allgemeiner formuliert um 10 Einheiten. Der Anwender bekommt somit beim Anbau des Abtastkopfes 2 in dem Bereich B2 einen verstärkten Hinweis bezüglich der Tendenz des Amplitudensignals A im Vergleich zum Bereich B1. Dies vereinfacht den Anbau, da in dem Bereich B1 Änderungen der Amplitude keine negativen Auswirkungen auf die Funktionsfähigkeit der Positionsmesseinrichtung haben. Starke Änderungen des Hinweises in diesem Bereich B1 würden den Anwender nur verwirren und einen falschen Anbau vortäuschen. Zum Erreichen des optimalsten Anbauzustandes und somit Funktionszustandes der Positionsmesseinrichtung ist es vorteilhaft, wenn auch im Bereich B1 eine Tendenz des Amplitudensignals A als Hinweis für den Anwender zur Verfügung gestellt wird. Der Multiplikationsfaktor um einen sehr kleinen Bereich um den Sollwert F kann aber auch konstant Null sein.

Zur vereinfachten Erläuterung der Erfindung wurde beim vorhergehenden Zahlenbeispiel eine Grenze zwischen den Bereichen B1 und B2 angenommen. Selbstverständlich ist eine kontinuierliche Änderung des Multiplikationsfaktors besonders vorteilhaft.

Der Hinweis ist im dargestellten Beispiel die Leuchtstärke einer Leuchtdiode 13, die am Abtastkopf 2 angebracht ist. Es sind aber auch andere Hinweismittel einsetzbar.

Anhand der Figuren 6 und 7 wird ein weiteres Ausführungsbeispiel der Erfindung erläutert. Das Mittel zur Bildung des Abweichungssignals B ist wiederum ein Differenzverstärker 123. Diesem nachgeordnet ist eine Parallelschaltung von zwei Dioden 141, 142, welche abhängig vom Vorzeichen und von der Größe des Abweichungssignals B ein in Figur 7 dargestelltes gewichtetes Abweichungssignal BG erzeugen. Proportional zu diesem gewichteten Abweichungssignal BG wird eine Leuchtdiodeneinheit in Form einer Parallelschaltung von zwei verschiedenfarbigen Leuchtdioden 13.1, 13.2 von einer Stromquelle 6 mit dem Strom I_{LED} angesteuert.

Anstelle der Dioden 141, 142 sind auch andere elektrische Bauelemente mit einer exponentiell verlaufenden Durchlasscharakteristik ähnlich einer Diode einsetzbar, insbesondere Transistoren.

Die Erfindung ist bei Längen- sowie Winkelmesseinrichtungen einsetzbar. Die Abtastelemente zur Erzeugung der Abtastsignale können dabei lichtelektrische Elemente, magnetfeldempfindliche, kapazitive sowie induktive Elemente sein.

Durch die erfindungsgemäße Einrichtung lassen sich auch Signalfehler, wie Offset und Amplitudendifferenz zwischen den um 90° gegeneinander phasenverschobenen Abtastsignalen S1 bis S4 am Hinweismittel 13 erkennen, wenn der Abtastkopf 2 innehalb weniger Signalperioden langsam in Messrichtung X verfahren wird.

## Patentansprüche

1. Kontrollvorrichtung zur Kontrolle der Amplitudenhöhe zumindest eines analogen Abtastsignals (S1 bis S4) einer Positionsmesseinrichtung mit
- einem Detektormittel (11) zur Bestimmung der Amplitudenhöhe des Abtastsignals (S1 bis S4) und Erzeugung eines davon abhängigen Amplitudensignals (A);
- einem Mittel (12) zur Bildung eines Abweichungssignals (B) durch Vergleich des Amplitudensignals (A) mit einem vorgegebenen Sollsignal (F) und mit
- einem Hinweismittel (13) zum Vorsehen eines Hinweises in Abhängigkeit vom Abweichungssignal (B), **gekennzeichnet durch** eine
- Bewertungseinrichtung (14), um das Abweichungssignal (B) unterschiedlich zu wichten, derart, dass eine Änderung des Abweichungssignals (B) bei kleinem Abweichungssignal (B) eine geringe oder keine Variation des Hinweises bewirkt, und demgegenüber diese Änderung bei einem größeren Abweichungssignal (B) eine größere Variation des Hinweises bewirkt.

2. Kontrollvorrichtung nach Anspruch 1, **dadurch gekennzeichnet, dass** die Änderung des Abweichungssignals (B) eine Variation des Hinweises gemäß einer Exponentialfunktion bewirkt.

3. Kontrollvorrichtung nach Anspruch 1 oder 2, **dadurch gekennzeichnet, dass** das Detektormittel (11) einen Multiplexer (111) enthält, an dem mehrere gegeneinander phasenverschobene periodische Abtastsignale (S1 bis S4) anliegen und der über eine Komparatorschaltung (112, 113) aus den Abtastsignalen (S1 bis S4) jeweils das mit maximaler Amplitude selektiert und eine Hüllkurve der positiven Halbwellen der Abtastsignale (S1 bis S4) bildet, wobei diese Hüllkurve das Amplitudensignal (A) ist.

4. Kontrollvorrichtung nach einem der Ansprüche 1 bis 3, **dadurch gekennzeichnet, dass** das Mittel (12) zur Bildung des Abweichungssignals (B) aus einem ersten Vergleicher (121) zur Bildung der Differenz zwischen dem Amplitudensignal (A) und dem Sollsignal (F) sowie aus einem zweiten Vergleicher (122) zur Bildung der Differenz zwischen dem Sollsignal (F) und dem Amplitudensignal (A) besteht.

5. Kontrollvorrichtung nach einem der vorhergehenden Ansprüche, **dadurch gekennzeichnet, dass** die Bewertungseinrichtung (14) ein elektrisches Bauelement (141, 142) mit einer Durchlasscharakteristik einer Diode ist.

6. Kontrollvorrichtung nach Anspruch 4 und Anspruch 5, **dadurch gekennzeichnet, dass** am Ausgang jedes Vergleichers (121, 122) ein Halbleiterbauelement (141, 142) mit einer Durchlasscharakteristik einer Diode angeordnet ist.

7. Kontrollvorrichtung nach einem der vorhergehenden Ansprüche, **dadurch gekennzeichnet, dass** am Ausgang der Bewertungseinrichtung (14) ein gewichtetes Abweichungssignal (BG) ansteht, das an einer Stromquelle (5, 6) anliegt, die das Hinweismittel (13) proportional zum gewichteten Abtastsignal (BG) ansteuert.

8. Kontrollvorrichtung nach einem der vorhergehenden Ansprüche, **dadurch gekennzeichnet, dass** das Hinweismittel eine Lichtquelle (13, 13.1, 13.2) ist.

9. Kontrollvorrichtung nach einem der vorhergehenden Ansprüche, **dadurch gekennzeichnet, dass** das Hinweismittel eine Lichtquelleneinheit (13.1, 13.2) ist, die in einer ersten Farbe leuchtet, wenn das Amplitudensignal (A) kleiner ist als das Sollsignal (F) und die in einer zweiten Farbe leuchtet, wenn das Amplitudensignal (A) größer ist als das Sollsignal (F).

10. Abtastkopf einer Positionsmesseinrichtung mit einer Kontrollvorrichtung (10) gemäß einem der vorhergehenden Ansprüche.

11. Positionsmesseinrichtung mit einem Maßstab (1) und einem diesen abtastenden Abtastkopf (2), wobei der Abtastkopf (2) eine Kontrollvorrichtung (10) gemäß einem der Ansprüche 1 bis 9 umfasst.

12. Verfahren zur Erzeugung eines Hinweises über die Amplitudenhöhe zumindest eines analogen Abtastsignals (S1, S2, S3, S4) einer Positionsmesseinrichtung mit einer Kontrollvorrichtung (10), mit folgenden Verfahrensschritten:
- Bestimmung der Amplitudenhöhe des Abtastsignals (S1 bis S4) und Erzeugung eines davon abhängigen Amplitudensignals (A);
- Bildung eines Abweichungssignals (B) durch Vergleich des Amplitudensignals (A) mit einem vorgegebenen Sollsignal (F);
- Vorsehen eines Hinweises in Abhängigkeit vom Abweichungssignal (B), **dadurch gekennzeichnet, dass**
- eine Änderung des Abweichungssignals (B) bei kleinem Abweichungssignal (B) eine geringe oder keine Variation des Hinweises verursacht, und demgegenüber diese Änderung bei einem größeren Abweichungssignal (B) eine größere Variation des Hinweises verursacht.

13. Verfahren zur Erzeugung eines Hinweises nach Anspruch 12, **dadurch gekennzeichnet, dass** die Änderung des Abweichungssignals (B) eine Variation des Hinweises gemäß einer Exponentialfunktion verursacht.

## Claims

1. Control device for controlling the amplitude level of at least an analog scanning signal (S 1 to S4) of a position measuring device with
• a detector means (11) for determining the amplitude level of the scanning signal (S1 to S4) and generating an amplitude signal (A) dependent thereon;
• a means (12) for forming a deviation signal (B) by comparing the amplitude signal (A) with a predefined desired signal (F) and with
• an indicator means (13) for providing a message in dependence on the deviation signal (B),
**characterised by**
• an evaluation device (14) to differently weight the deviation signal (B) in such a manner that in the case of a low deviation signal (B) a change in the deviation signal (B) causes a slight or no variation in the message, and in contrast in the case of a higher deviation signal (B) this change causes a greater variation in the message.

2. Control device according to claim 1, **characterised in that** the change in the deviation signal (B) causes a variation in the message in accordance with an exponential factor.

3. Control device according to claim 1 or 2, **characterised in that** the detector means (11) contains a multiplexer (111), at which a plurality of periodic scanning signals (S 1 to S4) phase-shifted relative to one another are present and which by means of a comparator circuit (112, 113) respectively selects from the scanning signals (S1 to S4) that with the maximum amplitude and forms an envelope of the positive half-waves of the scanning signals (S 1 to S4), wherein this envelope is the amplitude signal (A).

4. Control device according to one of claims 1 to 3, **characterised in that** the means (12) for forming the deviation signal (B) comprises a first comparator (121) for forming the difference between the amplitude signal (A) and the desired signal (F), and also a second comparator (122) for forming the difference between the desired signal (F) and the amplitude signal (A).

5. Control device according to one of the preceding claims, **characterised in that** the evaluation device (14) is an electrical component (141, 142) with an amplitude characteristic of a diode.

6. Control device according to claim 4 and claim 5, **characterised in that** a semiconductor component (141, 142) with an amplitude characteristic of a diode is arranged at the output of each comparator (121, 122).

7. Control device according to one of the preceding claims, **characterised in that** present at the output of the evaluation device (14) is a weighted deviation signal (BG), which is present at a current source (5, 6), which actuates the indicator means (13) proportionally to the weighted scanning signal (BG).

8. Control device according to one of the preceding claims, **characterised in that** the indicator means is a light source (13, 13.1, 13.2).

9. Control device according to one of the preceding claims, **characterised in that** the indicator means is a light source unit (13.1, 13.2), which lights up in a first colour when the amplitude signal (A) is lower than the desired signal (F), and which lights up in a second colour when the amplitude signal (A) is higher than the desired signal (F).

10. Scanning head of a position measuring device with a control device (10) according to one of the preceding claims.

11. Position measuring device with a scale (1) and a scanning head (2) scanning this, wherein the scanning head (2) comprises a control device (10) according to one of claims 1 to 9.

12. Method for generating a message concerning the amplitude level at least of an analog scanning signal (S1, S2, S3, S4) of a position measuring device with a control device (10), with the following method steps:
• determining the amplitude level of the scanning signal (S 1 to S4) and generating an amplitude signal (A) dependent thereon;
• forming a deviation signal (B) by comparing the amplitude signal (A) with a predefined desired signal (F);
• providing a message in dependence on the deviation signal (B),
**characterised in that**
• in the case of a low deviation signal (B) a change in the deviation signal (B) causes a slight or no variation in the message, and in contrast in the case of a higher deviation signal (B) this change causes a greater variation in the message.

13. Method for generating a message according to claim 12, **characterised in that** the change in the deviation signal (B) causes a variation in the message in accordance with an exponential factor.

## Revendications

1. Dispositif de contrôle destiné à contrôler la hauteur d'amplitude d'au moins un signal de balayage (S1 à S4) analogique d'un dispositif de mesure de position, comprenant
- un moyen détecteur (11) pour déterminer la hauteur d'amplitude du signal de balayage (S1 à S4) et générer un signal d'amplitude (A) en fonction de celle-ci;
- un moyen (12) pour former un signal d'écart (B) en comparant le signal d'amplitude (A) avec un signal de consigne (F) prédéterminé, et comprenant
- un moyen d'indication (13) pour fournir une indication en fonction du signal d'écart (B), **caractérisé en ce qu'**il comporte
- un dispositif d'évaluation (14) pour pondérer le signal d'écart (B) de différentes manières, de telle sorte que pour un petit signal d'écart (B), un changement du signal d'écart (B) engendre une faible variation ou aucune variation de l'indication, tandis que pour un signal d'écart (B) plus grand, ce changement engendre une variation plus importante de l'indication.

2. Dispositif de contrôle selon la revendication 1, **caractérisé en ce que** le changement du signal d'écart (B) engendre une variation de l'indication selon une fonction exponentielle.

3. Dispositif de contrôle selon la revendication 1 ou 2, **caractérisé en ce que** le détecteur (11) comprend un multiplexeur (111) auquel sont appliqués plusieurs signaux de balayage (S1 à S4) périodiques, mutuellement déphasés, et qui sélectionne à partir des signaux de balayage (S1 à S4), par l'intermédiaire d'un circuit comparateur (112, 113), respectivement le signal ayant l'amplitude maximale et établit une enveloppante des demi-ondes positives des signaux de balayage (S1 à S4), ladite enveloppante étant le signal d'amplitude (A).

4. Dispositif de contrôle selon une des revendications 1 à 3, **caractérisé en ce que** le moyen (12) pour former le signal d'écart (B) se compose d'un premier comparateur (121), destiné à établir la différence entre le signal d'amplitude (A) et le signal de consigne (F), et d'un deuxième comparateur (122) destiné à établir la différence entre le signal de consigne (F) et le signal d'amplitude (A).

5. Dispositif de contrôle selon une des revendications précédentes, **caractérisé en ce que** le dispositif d'évaluation (14) est un composant (141, 142) électrique doté d'une courbe de réponse de diode.

6. Dispositif de contrôle selon la revendication 4 et la revendication 5, **caractérisé en ce qu'**un composant semi-conducteur (141, 142), doté d'une courbe de réponse de diode, est disposé à la sortie de chaque comparateur (121, 122).

7. Dispositif de contrôle selon une des revendications précédentes, **caractérisé en ce que** la sortie du dispositif d'évaluation (14) délivre un signal d'écart pondéré (BG) qui est appliqué à une source de courant (5, 6), laquelle active le moyen d'indication (13) proportionnellement au signal d'écart pondéré (BG).

8. Dispositif de contrôle selon une des revendications précédentes, **caractérisé en ce que** le moyen d'indication est une source lumineuse (13, 13.1, 13.2)

9. Dispositif de contrôle selon une des revendications précédentes, **caractérisé en ce que** le moyen d'indication est une unité de source lumineuse (13.1, 13.2) qui éclaire avec une première couleur lorsque le signal d'amplitude (A) est inférieur au signal de consigne (F) et qui éclaire avec une deuxième couleur lorsque le signal d'amplitude (A) est supérieur au signal de consigne (F).

10. Tête de balayage d'un dispositif de mesure de position comprenant un dispositif de contrôle (10) selon une des revendications précédentes.

11. Dispositif de mesure de position comprenant une règle de mesure (1) et une tête de balayage (2) explorant celle-ci, ladite tête de balayage (2) comprenant un dispositif de contrôle (10) selon une des revendications 1 à 9.

12. Procédé de génération d'une indication concernant la hauteur d'amplitude d'au moins un signal de balayage (S1, S2, S3, S4) analogique d'un dispositif de mesure de position doté d'un dispositif de contrôle (10), comprenant les étapes suivantes :
- détermination de la hauteur d'amplitude du signal de balayage (S1 à S4) et génération d'un signal d'amplitude (A) en fonction de celle-ci;
- formation d'un signal d'écart (B) par comparaison du signal d'amplitude (A) avec un signal de consigne (F) prédéterminé;
- fourniture d'une indication en fonction du signal d'écart (B), **caractérisé en ce que**
- pour un petit signal d'écart (B), un changement du signal d'écart (B) engendre une faible variation ou aucune variation de l'indication, tandis que pour un signal d'écart (B) plus grand, ce changement engendre une variation plus importante de l'indication.

13. Procédé de génération d'une indication selon la revendication 12, **caractérisé en ce que** le changement du signal d'écart (B) provoque une variation de l'indication selon une fonction exponentielle.
